Europäisches Patentamt

European Patent Office

Office européen des brevets

(11) Veröffentlichungsnummer: **0 286 790 B1**

# (12) EUROPÄISCHE PATENTSCHRIFT

(45) Veröffentlichungstag der Patentschrift:
20.03.91 Patentblatt 91/12

(51) Int. Cl.$^5$: **A61C 1/08**

(21) Anmeldenummer: **88101629.9**

(22) Anmeldetag: **26.10.84**

(54) **Zahnärztliche Handstückanordnung mit Mitteln zur Lichtübertragung.**

(30) Priorität: **02.11.83 DE 3339669**

(43) Veröffentlichungstag der Anmeldung:
**19.10.88 Patentblatt 88/42**

(45) Bekanntmachung des Hinweises auf die
Patenterteilung:
**20.03.91 Patentblatt 91/12**

(84) Benannte Vertragsstaaten:
**AT CH DE FR IT LI**

(56) Entgegenhaltungen:
**DE-A- 3 132 995
DE-A- 3 215 219
FR-A- 2 551 651**

(61) Veröffentlichungsnummer der früheren
Anmeldung nach Art. 76 EPü: **0143985**

(73) Patentinhaber: **Siemens Aktiengesellschaft
Wittelsbacherplatz 2
W-8000 München 2 (DE)**

(72) Erfinder: **Goisser, Siegfried, Dipl.-Ing.
Kettelerstrasse 36
W-6141 Einhausen (DE)**
Erfinder: **Landgraf, Hermann
Donaustrasse 1
W-6148 Heppenheim (DE)**
Erfinder: **Schuss, Werner, Dipl.-Ing.
In der Lahrbach 18
W-6148 Heppenheim (DE)**

EP 0 286 790 B1

### Beschreibung

Die Erfindung bezieht sich auf eine zahnärztliche Handstückanordnung, enthaltend einen Antriebsmotor, an dessen einem Ende mittels Anschlußarmatur ein Versorgungsschlauch zur Zufuhr von elektrischem Strom und wenigstens einem fluiden Medium gehaltert ist, und ein zahnärztliches Handstück, welches am anderen Ende des Antriebsmotors mittels einer Rasteinrichtung an- und abkuppelbar gehalten ist, wobei im gekuppelten Zustand das Handstück gegenüber dem Antriebsmotor axial fixiert, ansonsten frei drehbar ist, zu welchem Zweck die Antriebswelle des Motors von einem zylindrischen Rohrstutzen umgeben ist, der eine die Drehbarkeit der Teile bildende Führung bildet, und mit einer Beleuchtungseinrichtung in Form eines im Handstück verlegten Lichtleiters, dessen motorseitiges Ende mit einer außermittig angeordneten elektrischen Lampe korrespondiert.

Bei einer bekannten solchen Handstückanordnung (DE-A-31 32 995) ist als Lichtzuführungselement eine Glühlampe bzw. ein von einer Glühlampe gespeister Lichtleiter im einen Handstückteil, im Antriebsteil, vorgesehen. Korrespondierend zum Lichtzuführungselement ist im gekuppelten Zustand im Griffteil des Handstückes ein Lichtleiter angeordnet, der sich innerhalb des Griffteils bis zum Kopfteil des Handstückes erstreckt. Die Lichtübergabe erfolgt an der Kupplungsstelle durch gegeneinander verdrehbare Lichtübertragungselemente, z.B. in Form von Lichtleitringen, die im Falle einer Handstückanordnung mit zentrisch gelagerter Antriebswelle konzentrisch zu den Triebwellen angeordnet sind. Durch die Lichtleitringe ist in jeder Relativlage, die die zu kuppelnden Handstückteile beim Aufstecken einnehmen, sichergestellt, daß beim axialen Zusammenfügen der Teile eine Lichtübertragung gesichert ist.

Aus der DE-A-32 15 219 ist eine Handstückanordnung bekannt, bei der die Lampe in einem gegenüber dem Handstück drehfest angeordneten Ansatzstück gehalten ist. Das Ansatzstück ist um die Handstücklängsachse frei drehbar mit der Anschlußarmatur eines Versorgungsschlauches verbunden. Die Anschlußarmatur enthält vom Versorgungsschlauch kommende Stromübertragungselemente in Form von Schleif- oder Ringkontakten, die mit der Lampe zugeordneten Gegenkontakten am Ansatzstück zusammenarbeiten.

Damit Lampe und ein das Licht im Handstück weiterführender Lichtleiter einander korrespondierend gegenüberstehen, ist bei dieser bekannten Anordnung zunächst die Zuordnung dieser Teile, d.h. die Positionierung von Lampe und Lichtleiter, gezielt vom Benutzer vorzunehmen. Danach sorgen zwischen Handstück und Ansatzstück stirnseitig vorgesehene Kugelrastungen dafür, daß diese Zuordnung erhalten, also das Ansatzstück mit dem Handstück drehfest verbunden bleibt.

Der im Anspruch 1 angegebenen Erfindung liegt die Aufgabe zugrunde, demgegenüber eine Handstückanordnung anzugeben, die hinsichtlich der optischen Elemente zur Lichtübertragung konstruktiv einfacher und damit technisch weniger aufwenig ist und mit der es insbesondere möglich ist, Licht mit geringeren Übertragungsverlusten über die Kupplungsstelle übertragen zu können. Darüber hinaus soll die Zugänglichkeit zu den dem Verschleiß unterliegenden Teilen der Beleuchtungseinrichtung, insbesondere zu den Kontaktelementen, verbessert werden.

Diese Aufgabe wird durch die in Anspruch 1 angegebene Handstichanordnung gelöst.

Vorteilhafte Ausgestaltungen und Weiterbildungen sind in den Unteransprüchen enthalten.

Besondere Vorteile der Erfindung sind darin zu sehen, daß die Lampe in axialer Richtung gesehen, vor dem Antriebsteil angeordnet ist, wodurch sich unter anderem kürzere Lichtwege ergeben, die Zugänglichkeit zur Lampe verbessert wird und insbesondere die Konstruktion des Antriebsteils vereinfacht werden kann, weil eine Lichtdurchführung durch den Motor entfällt. Dadurch läßt sich unter Umständen auch der Außendurchmesser des Antriebsteils kleiner halten. Ein weiterer Vorteil ist in der problemlosen Adaptierbarkeit von handelsüblichen Hand- und Winkelstücken und in der leichten Auswechselbarkeit des Aufnahmeteils, sei es zum Zwecke des Austauschs der Lampe oder zum Zwecke der Sterilisierung des Aufnahmeteils, zu sehen. Die Handstückanordnung kann sowohl einen Elektro- als auch einen Luftmotor beinhalten.

Ein Ausführungsbeispiel der Erfindung wird nachfolgend anhand der Zeichnung näher erläutert.

Es zeigen :

Figur 1 ein zahnärztliches Handstück in schaubildlicher Darstellung,

Figur 2 das Antriebsteil für das in Figur 1 dargestellte Hasndstück.

Figur 3 ein Aufnahmeteil für den Lichterzeuger in schaubildlicher Darstellung.

Figur 4 die elektrische Kontaktübertragung zwischen Lampenaufnahmeteil und Antriebsteil in schaubildlicher Darstellung,

Figur 5 einen Schnitt entlang der Linie V/V in Figur 3.

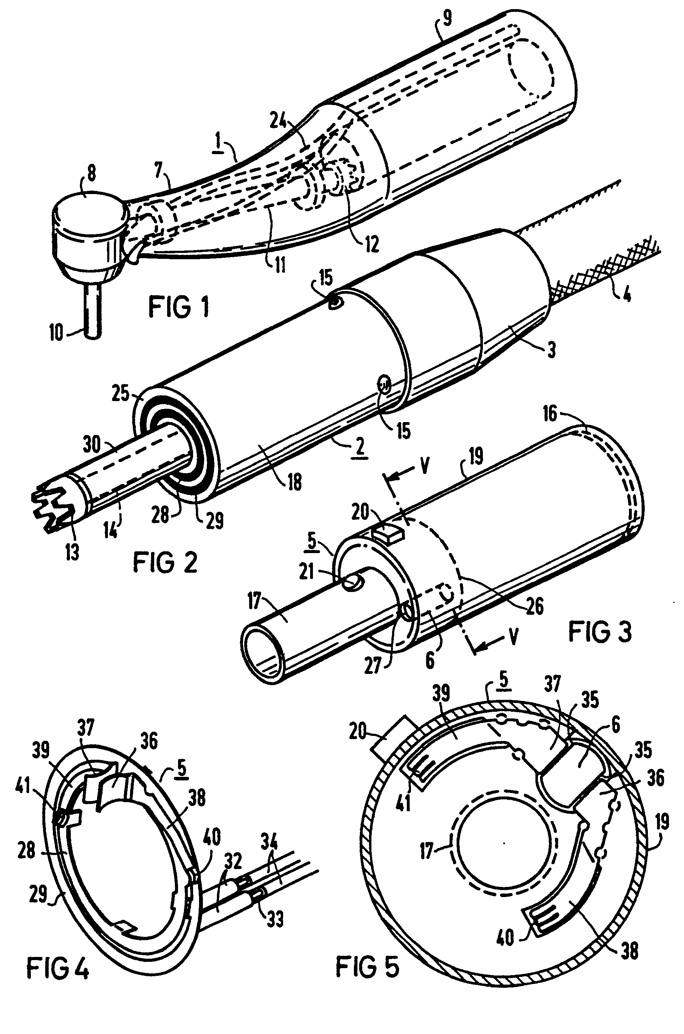

Die Figuren 1 bis 3 zeigen in schaubildlicher Darstellung eine zahnärztliche Handstückanordnung, bestehend aus einem in Figur 1 dargestellten Handstück 1, einem in Figur 2 dargestellten Antriebsteil 2, an dessen rückwärtigem Ende mittels einer Anschlußarmatur 3 ein Versorgungsschlauch 4 angeschlossen ist, und einem in Figur 3 dargestellten Aufnahmeteil 5 für eine Lampe 6.

Das Handstück 1 enthält am einen Ende ein Halsteil 7 mit einem Kopfgehäuse 8 und am anderen Ende eine Griffhülse 9. Im Kopfgehäuse 8 ist in bekannter Weise ein Werkzeug 10 rotierend gelagert, welches von einem im Antriebsteil 2 angeordneten Elektro- oder Luftmotor angetrieben wird. Zur Drehmomentübertragung ist im Halsteil 7 eine Triebwelle 11 gelagert, welche dem Antriebsteil 2 zugewandt eine Verzahnung 12 aufweist, die im gekuppelten Zustand mit der Verzahnung 13 der Motorwelle 14 des Antriebsteils 2 in Eingriff kommt. Zur Rastung des Aufnahmeteils 5 am Antriebsteil 2 sind an letzterem mehrere, am Umfang verteilt angeordnete Rastkugeln 15 vorgesehen, die im gekuppelten Zustand in eine in Figur 3 mit 16 bezeichnete Ringnut des Aufnahmeteils 5 rastend eingreifen und so das Aufnahmeteil gegen axiales Abgleiten am Antriebsteil 2 halten. Entsprechendes gilt für die Rastung des Handstücks 1 am Lampenaufnahmeteil 5.

Das Lampenaufnahmeteil 5 enthält einerseits einen Führungszapfen 17 und andererseits eine das Motorgehäuse 18 (Fig. 2) übergreifende Hülse 19. Der Führungszapfen 17 ist so ausgebildet, daß auf ihn handelsübliche Hand- und Winkelstücke, wie in Figur 1 gezeigt, in einer durch ISO genormten Bauart aufgeschoben und mittels einer durch Druckknopf 20 entriegelbaren Rasteinrichtung 21 in definierter Position festgelegt werden können. Im aufgeschobenen Zustand liegt die Stirnfläche 25 des Motorgehäuses 18 an einem in Figur 3 mit 26 angedeuteten Anschlag an. Die Lampe 6 ist mittels entsprechend ausgebildeter Fassung im vorderen Teil der Hülse 19 so gehaltert, daß das Licht stirnseitig an der mit 27 bezeichneten Lichtaustrittsstelle austreten kann. In der gerasteten Stellung stehen sich die Lichtaustrittsstelle 27 und das dem Aufnahmeteil 5 zugewandte Ende des im Handstück 1 verlegten Lichtleiters 24 korrespondierend gegenüber, während das gegenüberliegende Ende des Lichtleiters in bekannter Weise auf die Werkzeugspitze gerichtet ist. Die Lampe 6 kann dabei entweder achsparallel oder, sofern es die Platzverhältnisse erlauben, auch quer dazu angeordnet sein.

Die elektrische Kontaktierung der Lampe wird anhand der nachfolgenden Figuren näher erläutert.

Die Zuführung der elektrischen Spannung erfolgt über Schleifringe, wodurch eine Kontaktierung über den gesamten Drehbereich gegeben ist. Hierzu enthält das Motorgehäuse 18 des Antriebsteils 2 stirnseitig und praktisch in einer Ebene liegend zwei konzentrisch angeordnete Schleifringe 28, 29, an die Spannungspotential für die im Lampenaufnahmeteil 5 gehalterte Glühlampe 6 zugeführt wird. Zu den Schleifringen 28, 29 passende, die Spannung an die Lampe 6 weitergebende Kontaktfahnen sind in den nachfolgenden Figuren dargestellt.

Die Figuren 4 und 5 lassen die Kontaktierung der Lampe 6 mit den Spannungszuführungsleitungen erkennen. Die in Figur 4 schaubildlich dargestellten Schleifringe 28, 29 sind z.B. durch Einpressen in einem stirnseitig des Motorgehäuses 18 angeordneten, nicht näher dargestellten Trägerteil aus Kunststoff befestigt. Die Verbindung der Schleifringe 28, 29 mit den zugehörigen elektrischen Zuführungsleitungen erfolgt mittels einer Steckverbindung, bestehend aus geschlitzten (federnden) Buchsen 32, welche an den Schleifringen 28, 29 befestigt sind und in diese eingreifende Steckstifte 33, an denen die elektrischen Zuleitungen 34 befestigt sind. Das die Schleifringe aufnehmende Trägerteil ist vorteilhafterweise axial abnehmbar am Flansch der die Antriebswelle 14 konzentrisch umgebenden Hülse 30 gehalten.

Die Lampe 6 enthält, wie aus Figur 5, die einen Schnitt entlang der Linie V/V in Figur 3 darstellt, hervorgeht, parallele Schlüsselflächen 35, die entsprechende Kontaktflächen für die Lampenpole enthalten, an denen die einen Enden 36, 37 von Kontaktfahnen 38, 39 (Fig. 4) anliegen, deren andere Enden 40, 41 im montierten Zustand an den Schleifringen 28, 29 anliegen. Die Kontaktfahnen 38, 39 sind jeweils einstückig, wodurch eine direkte Verbindung von den Schleifringen zur Lampe hergestellt wird.

## Ansprüche

1. Zahnärztliche Handstückanordnung, enthaltend einen Antriebsmotor (2), an dessen einem Ende mittels Anschlußarmatur (3) ein Versorgungsschlauch (4) zur Zufuhr von elektrischem Strom und wenigstens einem fluiden Medium gehalten ist, und ein zahnärztliches Handstück (1), welches am anderen Ende des Antriebsmotors mittels einer Rasteinrichtung (21, 23) an- und abkuppelbar gehalten ist, wobei im gekuppelten Zustand das Handstück (1) gegenüber dem Antriebsmotor (2) axial fixiert, ansonsten frei drehbar ist, zu welchem Zweck die Antriebswelle (14) des Motors von einem zylindrischen Rohrstutzen (30) umgeben ist, der eine die Drehbarkeit der Teile bildende Führung bildet, und mit einer Beleuchtungseinrichtung in Form eines im Handstück (1) verlegten Lichtleiters (24), dessen motorseitiges Ende mit einer außermittig angeordneten elektrischen Lampe (6) korrespondiert, **dadurch gekennzeichnet**, daß die Lampe (6) in einem Aufnahmeteil (5) gehaltert ist, welches einerseits eine das Motorgehäuse (18) übergreifende Hülse (19) sowie Rastmittel (15, 16) zur axialen Fixierung am Antriebsmotor (2) und andererseits einen den Rohrstutzen (30) umgebenden Führungszapfen (17) sowie weitere Rastmittel (20, 21) zur Fixierung eines Handstückes (1) ISO-genormter Bauart enthält, daß die Lampe (6) im vorderen Teil der Hülse (19) mit stirnseitiger Lichtaustrittsstelle (27) gehaltert ist, daß an der Stirnfläche (25) des Motorgehäuses (18) und an korrespondierenden Flächen der Hülse (19) aus Schleifringen (28, 29) und gegen diese federnd anliegende Kontaktfedern bestehende Kontaktmittel vorgesehen sind, die einerseits mit elektrischen Zuführungsleitungen (34) des Versorgungsschlauches (4) und andererseits mit Kontakten (35) der Lampe (6) elektrisch verbunden sind.

2. Handstückanordnung nach Anspruch 1, **dadurch gekennzeichnet,** daß die Schleifringe (28, 29) konzentrisch am Antriebsmotor (2) und Kontaktfedern (40, 41) an der Hülse (19) angeordnet sind.

3. Handstückanordnung nach Anspruch 2, **dadurch gekennzeichnet,** daß die Schleifringe (28, 29) in einer Ebene liegend an einem stirnseitig des Gehäuses (18) des Antriebsmotors (2) angeordneten Träger angeordnet sind.

4. Handstückanordnung nach Anspruch 2, **dadurch gekennzeichnet,** daß einteilige Kontaktfedern (40, 41) vorgesehen sind, welche eine direkte Verbindung von der Lampe (6) zu den Schleifringen (28, 29) herstellen.

5. Handstückanordnung nach Anspruch 2, **dadurch gekennzeichnet,** daß zum Anschluß der elektrischen Zuführungsleitungen (34) an die Schleifringe (28, 29) Steckkontakte (32, 33) vorgesehen sind.

6. Handstückanordnung nach einem der Ansprüche 1 bis 5, **dadurch gekennzeichnet,** daß eine Lampe mit parallelen, die Kontaktierung enthaltenden Schlüsselflächen (35) verwendet ist.

## Claims

1. Dental handpiece arrangement containing a drive motor (2), on the one end of which there is held by means of a connection fitting (3) a supply hose (4) for the feed of electrical current and at least one fluid medium, and a dental handpiece (1), which is held at the other end of the drive motor by means of a catch device (21, 23) so that it can be coupled or uncoupled, whereby in the coupled state the handpiece (1) is axially fixed relative to the drive motor (2), otherwise it is freely rotatable, for which purpose the drive shaft (14) of the motor is surrounded by a cylindrical socket piece (30), which forms a guide establishing the rotation range of the parts, and with an illumination device in the form of a light conductor (24) located in the handpiece (1), the motor-side end of which corresponds with an eccentrically arranged electrical lamp (6), characterized in that the lamp (6) is held in a receiving part (5), which contains on the one hand a casing (19) engaging over the motor housing (18), as well as catch means (15, 16) for the axial fixing on the drive motor (2), and on the other hand a guide pin (17) surrounding the socket piece (30) as well as further catch means (20, 21) for fixing a handpiece (1) of ISO-standardized type of construction, in that the lamp (6) is held in the front part of the casing (19) with front-side light exit point (27), in that on the front surface (25) of the motor housing (18) and on corresponding surfaces of the casing (19) there are provided contact means consisting of slip rings (28, 29) and contact springs resting against these in a resilient manner, which on the one hand are electrically connected to electrical feed lines (34) of the supply hose (4) and on the other hand to contacts (35) of the lamp (6).

2. Handpiece arrangement according to claim 1, characterized in that the slip rings (28, 29) are arranged concentrically on the drive motor (2) and contact springs (40, 41) are arranged on the casing (19).

3. Handpiece arrangement according to claim 2, characterized in that the slip rings (28, 29) are arranged lying in a plane on a carrier arranged on the front side of the housing (18) of the drive motor (2).

4. Handpiece arrangement according to claim 2, characterized in that one-part contact springs (40, 41) are provided which produce a direct connection from the lamp (6) to the slip rings (28, 29).

5. Handpiece arrangement according to claim 2, characterized in that plug contacts (32, 33) are provided for the attachment of the electrical feed lines (34) to the slip rings (28, 29).

6. Handpiece arrangement according to one of claims 1 to 5, characterized in that a lamp with parallel key surfaces (35) containing the contact is used.

## Revendications

1. Agencement de pièces à main de dentisterie, comportant un moteur d'entraînement (2) à l'une des extrémités duquel est supporté, à l'aide d'un raccord de liaison (3), un tuyau d'alimentation (4) pour l'alimentation en courant électrique et d'au moins un milieu fluide, ainsi qu'une pièce à main de dentisterie (1) qui est montée à l'autre extrémité du moteur d'entraînement à l'aide d'un dispositif d'encliquetage de manière à pouvoir y être accouplée et d'en être dégagée, étant noté qu'à l'état accouplé, la pièce à main (1) est fixée axialement par rapport au moteur d'entraînement, alors qu'elle peut librement tourner, ce pourquoi l'arbre d'entraînement (14) du moteur est entouré d'un embout tubulaire et cylindrique (30) qui constitue un guidage qui forme la rotabilité des éléments, et avec un dispositif d'éclairage sous la forme d'un guide d'ondes de lumière (24) disposé dans la pièce à main (1) et dont l'extrémité, située côté moteur, correspond avec une lampe électrique (6) disposée en position excentrée, caractérisé par le fait que la lampe (6) est supportée dans un élément de réception (5) qui comporte, d'une part, une douille (19) recouvrant le carter (18) du moteur ainsi que des moyens d'enclenchement (15, 16) pour la fixation axiale sur le moteur d'entraînement (2), et, d'autre part, un tourillon de guidage (17) qui entoure l'embout tubulaire (30), ainsi que d'autres moyens d'encliquetage (20, 21) pour la fixation de la pièce à main (1), et du type de construction normalisé ISO, que la lampe (6) est supportée dans la partie antérieure de la douille (19) avec sortie frontale pour la lumière, que dans la surface frontale (25) du carter du moteur (18) et dans les surfaces correspondantes de la douille (19) sont prévus des moyens de contact constitués par des bagues de frottement (28, 29) et par des ressorts de contact qui portent élastiquement contre ces bagues, lesquels moyens de contact sont reliés d'une part aux conducteurs électriques d'amenée du courant (34) du tuyau d'alimentation (4), et, d'autre part, à des contacts (35) de la lampe (6).

2. Agencement de pièces à main selon la revendication 1, caractérisé par le fait que les bagues de frottement (28, 29) sont disposées concentriquement sur le moteur d'entraînement (2) et que les ressorts de contact (40, 41) sont disposés sur la douille (19).

3. Agencement de pièces à main selon la revendication 2, caractérisé par le fait que les bagues de frottement (28, 29) qui sont situées dans un plan, sont disposées sur un support qui est prévu du côté frontal du carter (18) du moteur d'entraînement (2).

4. Agencement de pièces à main selon la revendication 2, caractérisé par le fait que sont prévus des ressorts de contact d'une seule pièce (40, 41), lesquels ressorts de contact établissent une liaison directe entre lampe ? ? ? (6) et les bagues de frottement (28, 29).

5. Agencement de pièces à main selon la revendication 2, caractérisé par le fait que pour le raccordement des conducteurs électriques d'alimentation en courant (34), des contacts à enfichage (32, 33) sont prévus sur les bagues de frottement (28, 29).

6. Agencement de pièces à main selon l'une des revendications 1 à 5, caractérisé par le fait que l'on utilise une lampe avec des surfaces de panneton parallèles, qui contiennent les contacts.

FIG 1

FIG 2

FIG 3

FIG 4

FIG 5